# FASCICULE DE BREVET EUROPEEN

(11) **EP 1 351 831 B1**
(45) Date de publication et mention de la délivrance du brevet: **29.07.2009**
(21) Numéro de dépôt: 02700335.9
(22) Date de dépôt: 18.01.2002
(51) Int. Cl.: B60C 23/04

(54) **PROCEDE DE MISE EN CORRESPONDANCE D'UN IDENTIFIANT D'UNE VALVE D'UNE ROUE D'UN VEHICULE AUTOMOBILE AVEC UN IDENTIFIANT DE CETTE ROUE**
RADIDENTIFIKATOR- ORTUNGSVERFAHREN
METHOD FOR MATCHING A MOTOR VEHICLE WHEEL VALVE IDENTIFIER WITH AN IDENTIFIER OF SAID WHEEL

(30) Priorité: 18.01.2001 FR 0100672
(43) Date de publication de la demande: 15.10.2003
(73) Titulaire: RENAULT S.A.S., 92100 Boulogne Billancourt (FR)
(72) Inventeur: ALBERTUS, Sébastien, F-78180 Montigny-Le-Bretonneux (FR)
(74) Mandataire: Davies, Owen Robert Treharne
(86) Numéro de dépôt international: PCT/FR2002/000206
(87) Numéro de publication internationale: WO 2002/057098

(56) Documents cités:
- EP-A- 1 026 015

## Description

La présente invention est relative à un procédé de mise en correspondance d'un identifiant d'une valve d'une roue avec un identifiant de cette roue enregistré dans la mémoire d'un calculateur de bord d'un véhicule automobile. -

Suivant un procédé de mise en correspondance, on utilise une valve du type pouvant émettre une trame de signaux hertziens, ou trame hertzienne, contenant au moins l'identifiant de la valve et un état précisant les conditions d'émission de la valve. En réponse à une excitation spécifique, une trame hertzienne spécifique contenant au moins un identifiant de valve et un état spécifique est émise par ce type de valve. Diverses informations comme la pression du pneumatique de la roue portant la valve peuvent être incluses dans cette trame.

Le calculateur de bord possède en mémoire les identifiants des roues susceptibles de porter des valves du type précité.

Un récepteur de bord, associé au calculateur de bord, reçoit les trames émises par les valves du véhicule, voire par des valves d'autres véhicules. Il les transmet au calculateur de bord qui les décode.

Pour fournir des renseignements exploitables par un conducteur du véhicule, le calculateur de bord doit affecter l'information contenue dans ces trames aux roues portant les valves qui les ont émises. Il doit donc avoir en mémoire une table précisant la correspondance entre l'identifiant de chaque valve et l'identifiant de la roue qui la porte.

Suite à un changement de roue, ou à la première monte des roues, un opérateur doit mettre à jour cette table de correspondance. Cette mise à jour procède selon les étapes suivantes :
- excitation spécifique d'une valve dont l'opérateur souhaite mettre en correspondance l'identifiant avec l'identifiant de la roue qui la porte, afin de provoquer l'émission, par cette valve, d'une trame se distinguant par un état spécifique,
- réception de la trame spécifique émise en réponse à l'excitation,
- décodage de la trame spécifique,
- analyse d'au moins les données « identifiant de valve » et « état » contenues dans la trame spécifique et reconnaissance de l'identifiant de cette valve,
- présentation à un opérateur au moins de la donnée « identifiant de valve » contenue dans ladite trame spécifique, un moyen de distinction rendant distinguable ladite donnée,
- mise en correspondance de l'identifiant de la roue avec l'identifiant de la valve par l'opérateur,
- entrée dans ladite mémoire de l'identifiant de la valve en correspondance avec l'identifiant de la roue.

La technique antérieure enseigne aussi un procédé dans lequel un opérateur utilise un outil à fonctions multiples servant à la fois d'émetteur d'excitations spécifiques, de récepteur de trames émises par des valves, d'outil de décodage des trames et d'outil d'affichage.

Un outil de diagnostic, généralement disponible pour opérer différents contrôles sur un véhicule, peut servir d'interface entre l'opérateur et le calculateur de bord.

Plus précisément, au moyen de cet outil à fonctions multiples, l'opérateur émet une excitation spécifique, par exemple en 125 KHz, vers une valve dont l'identifiant lui est inconnu. L'outil à fonctions multiples reçoit en réponse une trame contenant un état spécifique et émise sur une fréquence déterminée, par exemple 433 MHz, par la valve excitée. Il la décode, en extrait et affiche au moins l'identifiant de la valve émettrice en correspondance avec son état spécifique. Cet état spécifique signifie que la trame provient d'une valve excitée au moyen de l'outil à fonctions multiples et la distingue ainsi des autres trames reçues par l'outil à fonctions multiples.

Un outil à fonctions multiples, complexe, est cher.

De plus, il n'est utilisable qu'avec des valves émettant sur une seule fréquence, par exemple 433 MHz. Or toutes les valves du type précité n'émettent pas sur la même fréquence, notamment pour prendre en compte des autorisations particulières à certains pays.

Des outils à fonctions multiples analogues à celui décrit ci-dessus mais capables de recevoir d'autres fréquences doivent donc être utilisés pour pouvoir changer des roues équipées de valves du type précité émettant sur différentes fréquences. Dans l'état actuel de la technique, les garages doivent s'équiper d'autant d'outils différents qu'il y a de fréquences d'émission utilisées par ces valves.

Un exemple d'art antérieur est illustré par le contenu du document EP-A-1 026 015 sur lequel les préambules des revendications 1 et 10 s'appuyent.

La présente invention a pour but principal de fournir un procédé de mise en correspondance, dans un calculateur de bord, de l'identifiant d'une valve d'une roue avec l'identifiant de cette roue, qui soit bon marché et compatible avec des valves du type précité émettant sur des fréquences variées.

On atteint ce but par une présentation à l'opérateur au moins de la donnée « identifiant de valve » contenue dans ladite trame spécifique, un moyen de distinction rendant distinguable cette donnée, au moyen d'un outil de diagnostic, cet outil de diagnostic recevant au moins les données « identifiant de valve » et « état » par l'intermédiaire du récepteur de bord.

Ainsi, le procédé selon l'invention utilise-t-il un outil de diagnostic généralement disponible et dont la reprogrammation à cet effet est peu coûteuse.

Aucun récepteur autre que celui du calculateur de bord, déjà disponible, n'est nécessaire.

Le procédé selon l'invention est donc moins onéreux que celui de la technique antérieure.

Le procédé selon l'invention permet également de s'affranchir de l'incompatibilité de l'outil à fonctions multiples de la technique antérieure avec certaines fréquences d'émission de valves, les valves portées par les roues d'un véhicule étant choisies pour émettre sur une fréquence interprétable par le récepteur de bord de ce véhicule.

Suivant d'autres caractéristiques, optionnelles, de l'invention :
- les données « identifiant de valve » et « état » reçues par ledit outil de diagnostic sont préalablement décodées par ledit calculateur de bord ;
- ladite excitation spécifique est provoquée au moyen d'un outil émetteur, un tel outil émetteur étant simple et bon marché ;
- ladite excitation spécifique est provoquée au moyen d'un dégonflage d'un pneumatique de la roue portant ladite valve, ce qui d'une part réduit les coûts au maximum, et d'autre part permet une mise en correspondance de l'identifiant d'une valve et de l'identifiant d'une roue même en cas de panne d'un outil émetteur capable d'exciter spécifiquement une valve ;
- ledit outil de diagnostic réalise ladite analyse d'au moins les données « identifiant de valve » et « état » contenues dans ladite trame spécifique et ladite reconnaissance de l'identifiant de ladite valve,
- ledit opérateur réalise ladite mise en correspondance au moyen dudit outil de diagnostic.
- on réalise l'entrée en mémoire dudit identifiant de valve en correspondance avec ledit identifiant de roue au moyen dudit outil de diagnostic ;
- l'outil de diagnostic transmet au calculateur de bord un identifiant de valve qu'il a reçu de ce dernier, c'est-à-dire que l'opérateur, après avoir établi la correspondance entre un identifiant de valve et un identifiant de roue tels que l'outil de diagnostic les lui a présentés, n'a pas besoin de saisir cet identifiant de valve, ce qui limite le risque d'erreur.
- un opérateur met en correspondance un identifiant de valve, un identifiant de la roue et un identifiant de jeu de roues au moyen de l'outil de diagnostic ;

La présente invention se rapporte également à un dispositif pour la mise en oeuvre le procédé selon l'invention.

D'autres caractéristiques et avantages de la présente invention apparaîtront à la lecture de la description qui va suivre et à l'examen du dessin annexé dans lequel :
- la figure 1 représente schématiquement un mode de réalisation d'un dispositif pour la mise en oeuvre du procédé selon l'invention, et
- la figure 2 représente un organigramme du procédé de mise en correspondance d'un identifiant de valve et d'un identifiant de roue selon l'invention.

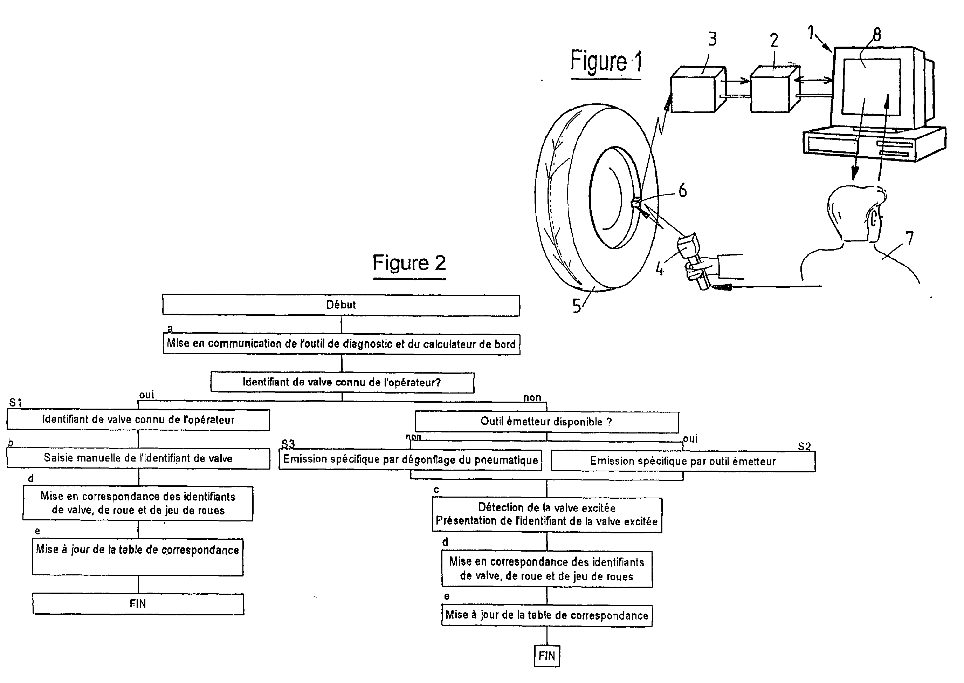

On se réfère à la figure 1 du dessin annexé où il apparaît que le dispositif représenté comprend un outil de diagnostic 1, prenant par exemple la forme d'un micro-ordinateur.

Un tel outil de diagnostic 1 est généralement disponible pour opérer différents contrôles sur un véhicule, en analyser les résultats et fournir à un opérateur différentes hypothèses sur les pannes ou les dysfonctionnements du véhicule. Il est utilisé par exemple pour détecter des défauts d'injection, de sacs gonflables ou « air bags », pour configurer un calculateur de bord 2, lui apprendre les clés de l'anti-démarrage, etc. Pour s'adapter à différents véhicules ou à différentes normes, il dispose d'une pluralité de fonctions de diagnostic et est facilement reprogrammable.

S'il est préférable de reprogrammer un outil de diagnostic 1 existant, un outil de diagnostic 1 peut être spécialement développé pour la mise en oeuvre du procédé selon l'invention.

L'outil de diagnostic 1 est connecté, par exemple par un câble, au calculateur de bord 2, lui-même connecté à un récepteur de bord 3.

Un outil émetteur 4 permet d'émettre des excitations spécifiques.

Au moins une roue 5 du véhicule porte une valve 6 du type précité.

Excitée par une excitation spécifique émise par l'outil émetteur 4 actionné par un opérateur 7, la valve 6 émet en réponse à cette excitation une trame hertzienne spécifique que reçoit le récepteur de bord 3. Le récepteur de bord 3 transmet cette trame au calculateur de bord 2 qui la décode.

L'outil de diagnostic 1 extrait du calculateur de bord 2 au moins les données « identifiant de valve » et « état » contenues dans la trame.

La trame de la valve 6 excitée au moyen de l'outil émetteur 4 contient un état spécifique différent de celui contenu dans les trames émises par d'autres valves non excitées par l'outil émetteur 4. Cet état spécifique permet de distinguer la trame spécifique.

L'outil de diagnostic 1 analyse les trames qu'il reçoit. Il reconnaît l'identifiant de la valve 6 excitée au moyen de l'outil émetteur 4, car il est contenu dans une trame contenant un état spécifique.

L'outil de diagnostic 1 présente alors l'identifiant de cette valve 6 de manière distinctive pour l'opérateur 7. Des moyens de distinction peuvent être par exemple un affichage dans une zone d'écran spécifique ou selon un format particulier.

Dans un autre mode de réalisation de l'invention, l'outil de diagnostic 1 affiche tous les couples (« identifiant de valve », « état ») qu'il reçoit. L'opérateur 7 effectue leur analyse et reconnaît l'identifiant de la valve 6 excitée au moyen de l'outil émetteur 4. Le moyen de distinction de l'identifiant de la valve 6 est alors l'affichage de l'état spécifique en regard de cet identifiant.

L'outil de diagnostic 1 connaît les identifiants des roues 5 du véhicule susceptibles de porter des valves 6 émettrices du type précité, de par son paramétrage ou, selon un autre mode de réalisation de l'invention, parce qu'il a reçu cette information du calculateur de bord 2.

Les identifiants de roues peuvent par exemple être « 1 » pour la roue avant gauche, « 2 » pour la roue avant droit, « 3 » pour la roue arrière droit et « 4 » pour la roue arrière gauche.

Une roue peut également être identifiée par une ou plusieurs adresses prédéfinies de la mémoire où sont écrites les informations relatives à cette roue. La mise en correspondance d'un identifiant de valve avec un identifiant de roue consiste alors à écrire l'identifiant de valve à une adresse correspondant à cette roue.

L'outil de diagnostic 1 présente à l'opérateur 7 les différents identifiants des roues 5 susceptibles de porter la valve 6 excitée au moyen de l'outil émetteur 4 ou, de préférence, l'interprétation de ces identifiants en terme de position, par exemple « roue avant gauche » de préférence à « 1 ».

Au moyen de l'outil de diagnostic 1, l'opérateur 7 met en correspondance l'identifiant de la valve 6 qu'il a reconnu comme ayant été excitée au moyen de l'outil émetteur 4 avec l'identifiant de la roue 5 qu'il a excitée au moyen de l'outil émetteur 4.

L'outil de diagnostic 1 transmet alors au calculateur de bord 2 la correspondance « identifiant de valve » et « identifiant de roue » afin de mettre à jour la table de correspondance entre ces identifiants. Suivant la figure 2, l'opérateur 7 procède en plusieurs étapes.

Pour que l'opérateur 7 puisse mettre en oeuvre le procédé selon la présente invention, un outil de diagnostic 1 doit être programmé. La nature de cette programmation résulte de l'utilisation de l'outil de diagnostic 1 telle qu'elle est décrite ci-dessous.

Dans une première étape (a), l'opérateur 7 branche l'outil de diagnostic 1 dûment programmé sur le calculateur de bord 2 et établit entre eux une connexion.

Cette connexion permet à l'outil de diagnostic 1 d'extraire différentes informations du calculateur, dont notamment le contenu des trames émises par des valves du type précité et reçues par le calculateur de bord 2, et de transmettre au calculateur de bord 2 des informations, après que l'opérateur 7 a pris certaines décisions, notamment par exemple la mise en correspondance des identifiants de valve et des identifiants de roue.

Trois situations se présentent à l'opérateur 7 :
- Dans une première situation (S1), il connaît l'identifiant de la valve 6, par exemple parce que le fournisseur de la roue 5 le lui a fourni ;
- Dans une deuxième situation (S2), la plus courante chez les garagistes, il ne connaît pas l'identifiant de la valve 6 et dispose d'un outil émetteur 4 pour exciter spécifiquement cette valve 6 ;
- Dans une troisième situation (S3), il ne connaît pas l'identifiant de la valve 6 et ne dispose pas d'outil émetteur 4 pour exciter spécifiquement cette valve 6, mais peut procéder à un dégonflage du pneumatique afin que la valve 6 génère une trame contenant un état spécifique signifiant que l'émission de la trame résulte de la détection d'une fuite.

L'opérateur 7 entre dans l'outil de diagnostic 1 la situation dans laquelle il se trouve.

Dans la première situation (S1), la mise à jour de la table de correspondance se fait par une saisie de l'identifiant de valve par l'intermédiaire de l'outil de diagnostic 1 (étape « b »).

La saisie de l'identifiant de la valve 6 est indispensable. Des routines informatiques peuvent permettre de contrôler la validité des entrées. D'autres moyens de saisie, comme par exemple la saisie de codes à barres peuvent également être proposés.

Dans les deuxième et troisième situations (S2 et S3), l'opérateur 7 ne connaît pas l'identifiant d'une valve 6 d'une roue 5, lors d'un changement de roue par exemple.

Il lui faut donc exciter la valve 6 dont il ignore l'identifiant avec un signal spécifique. En réponse à ce signal spécifique d'excitation, la valve 6 émet une trame contenant un état spécifique qui permet à cette trame de se distinguer des autres trames envoyées par d'autres valves émettant sur la même fréquence, par exemple des valves des autres roues du véhicule.

En fonction du type d'émission, un état peut par exemple prendre les valeurs « 01 », « 02 », « 03 » ou « 00 », signifiant respectivement une émission normale à l'arrêt du véhicule, une émission normale en roulage, une émission due à une excitation spécifique suite à une fuite, ou provoquée par une excitation spécifique générée par une onde émise par un outil émetteur 4. Les deux dernières excitations sont dites spécifiques parce qu'elles sont normalement exceptionnelles et se distinguent donc des autres types d'excitations, plus couramment générés.

Dès réception de l'information lui précisant que l'opérateur 7 se trouve dans la deuxième ou la troisième situation, l'outil de diagnostic 1 initialise une valeur de référence à la valeur de l'état correspondant à une émission suite à une excitation par un outil émetteur 4, par exemple « 00 », ou suite à une fuite du pneumatique portant la valve 6, par exemple « 03 », respectivement.

S'il dispose d'un outil émetteur 4 lui permettant d'exciter la valve 6 d'une roue 5, l'opérateur 7 excite la valve 6 de cette roue 5 en actionnant cet outil émetteur 4 de manière que seule la valve 6 de cette roue 5 soit excitée par le signal spécifique d'excitation, par exemple en émettant ce signal à proximité immédiate de la valve 6 de la roue 5.

S'il ne dispose pas d'un outil émetteur 4 lui permettant d'exciter la valve 6 d'une telle roue 5, l'opérateur 7 peut exciter la valve 6 de cette roue 5 en la faisant fuir.

En réponse au signal spécifique d'excitation, la valve 6 émet au moins une trame contenant un état spécifique correspondant au type d'excitation reçue, par exemple « 00 » ou « 03 » selon que l'émission résulte d'une excitation par un outil émetteur 4 ou fait suite à une fuite, respectivement.

Les trames en provenance des valves émettrices sont reçues par le récepteur de bord 3 qui les transmet au calculateur de bord 2.

L'outil de diagnostic 1 scrute alors sensiblement en permanence la partie de la mémoire du calculateur de bord 2 où ces trames sont enregistrées. Il analyse les états contenus dans ces trames et les compare à la valeur de référence.

Lorsqu'une valve 6 est excitée spécifiquement, avec l'outil émetteur 4 ou suite à une fuite rapide, elle émet une trame contenant un état égal à la valeur de référence.

Suivant l'étape « c », l'outil de diagnostic 1 détecte cette égalité, extrait notamment l'identifiant de valve de la trame contenant cet état et propose à l'opérateur 7 de mettre en correspondance cet identifiant de valve avec une position de roue 5.

Dans l'étape « d », l'opérateur 7 met en correspondance l'identifiant de la valve 6 avec un identifiant de la roue 5 qui porte ladite valve 6 en entrant ou en marquant ces identifiants dans l'outil de diagnostic 1 au moyen de saisies ou de sélections.

Le dialogue entre l'outil de diagnostic 1 et l'opérateur 7 peut se faire par l'intermédiaire des outils classiques informatiques, tels qu'écran, clavier, souris ou de lecteur de codes à barres.

Des sélections sur un écran 8, au moyen de boîtes de dialogues, de dessins, de menus déroulants, d'icônes, etc. peuvent compléter des saisies par clavier, sources d'erreurs.

Les moyens de dialogue ne sont pas exclusifs les uns des autres.

Une valeur d'un identifiant de jeu de roues peut également être mis en correspondance avec un identifiant de valve et un identifiant de roue.

Certains véhicules sont en effet équipés de deux jeux de roues, un premier pour l'hiver et un deuxième pour l'été. Le calculateur de bord 2 peut être conçu pour mémoriser les deux jeux de roues.

L'outil de diagnostic 1 permet une mise en correspondance dans la même étape « d » de l'identifiant du jeu d'une roue 5, de l'identifiant de cette roue 5 et de l'identifiant de la valve 6 qu'elle porte, la saisie ou la sélection de jeu s'effectuant par des moyens classiques de dialogue entre un opérateur 7 et un ordinateur.

Après avoir mis initialement en correspondance dans la mémoire du calculateur de bord 2, pour chacune des roues des deux jeux, l'identifiant de la roue 5, l'identifiant du jeu auquel elle appartient et l'identifiant de la valve 6 qu'elle porte, l'opérateur 7 peut changer de jeu de roues sans devoir préciser à nouveau au calculateur de bord 2 les identifiants de valve. Il lui suffit de respecter les positions qu'avaient les roues du nouveau jeu lors de la mise en correspondance initiale.

Le calculateur de bord 2 reconnaît l'appartenance des identifiants de valve au premier ou au second jeu de roues et déduit de la table de correspondance l'identifiant des roues qui les portent.

Dans l'étape suivante « e », l'outil de diagnostic 1 transmet au calculateur de bord 2 les triplets, ordonnés dans un ordre fonction du calculateur de bord 2, (« Identifiant du jeu », « Identifiant de roue », « Identifiant de valve ») et modifie ou fait modifier par le calculateur de bord 2 la table de correspondance du calculateur de bord 2 en conséquence.

L'outil de diagnostic 1 peut alors demander à l'utilisateur s'il souhaite mettre à jour la correspondance d'un autre roue 5 ou s'arrêter.

Une option de l'outil de diagnostic 1 permet à l'opérateur 7 de lui préciser, dès la première étape « a », le nombre de roues 5 dont il souhaite mettre à jour la correspondance, auquel cas le programme boucle sur lui-même jusqu'à avoir effectué toutes ces mises à jour.

Classiquement, un paramétrage du programme de l'outil de diagnostic 1 permet à l'opérateur 7 de quitter le programme dès qu'il le souhaite, quelle que soit l'étape du procédé.

Pour éviter de laisser l'outil de diagnostic 1 en scrutation de la mémoire du calculateur de bord 2, une temporisation peut être lancée lors de la première étape « a ». Si à l'échéance de cette temporisation aucune trame contenant un état égal à la valeur de référence n'a été reçue par le récepteur de bord 3 et transmise au calculateur de bord 2, l'outil de diagnostic 1 informe l'opérateur 7, par exemple par un message d'erreur sur l'écran 8 ou par un signal sonore, de l'échec de la procédure de mise en correspondance. L'outil de diagnostic 1 peut par exemple afficher un menu permettant à l'opérateur 7 de choisir de reprendre le procédé à partir de la première étape « a » ou d'y mettre fin.

La réponse d'une valve 6 suite à une fuite du pneumatique de la roue 5 qui la porte peut prendre plusieurs minutes. Par exemple un délai de 15 minutes peut être nécessaire entre le début du dégonflage et cette émission. C'est pourquoi il est préférable d'utiliser un outil émetteur 4 plutôt que de dégonfler le pneumatique de la roue 5. La perte est d'autant plus grande qu'il est nécessaire de regonfler le pneumatique après avoir identifié la valve 6.

Ce délai avant émission justifie une temporisation relativement longue en cas d'excitation d'une valve 6 par un dégonflage, par exemple de 60 minutes, à comparer par exemple à 10 minutes en cas d'excitation au moyen d'un outil émetteur 4.

Comme cela apparaît clairement à présent, le procédé selon l'invention fournit un procédé de mise en correspondance, dans un calculateur de bord 2, de l'identifiant d'une valve 6 d'une roue 5 avec l'identifiant de cette roue 5, qui est bon marché et compatible avec des valves 6 du type précité émettant sur des fréquences variées.

Bien entendu, la présente invention n'est pas limitée au mode de réalisation décrit et représenté, fourni à titre d'exemple illustratif et non limitatif.

## Revendications

1. Procédé de mise en correspondance d'un identifiant d'une valve émettrice (6) d'une roue (5) avec un identifiant de ladite roue (5) enregistré dans une mémoire d'un calculateur de bord (2) d'un véhicule automobile, ladite valve (6) pouvant émettre, en réponse à une excitation spécifique, une trame de signaux hertziens spécifique contenant au moins un identifiant de valve et un état spécifique, un récepteur de bord (3) recevant ladite trame, la transmettant audit calculateur de bord (2) et ledit calculateur de bord (2) décodant ladite trame, comportant les étapes suivante :
- excitation spécifique de ladite valve (6),
- réception de ladite trame spécifique émise en réponse à ladite excitation,
- décodage de ladite trame spécifique,
- analyse d'au moins les données « identifiant de valve » et « état » contenues dans ladite trame spécifique et reconnaissance de l'identifiant de ladite valve (6),
- présentation, au moyen d'un outil de diagnostique (1), à un opérateur (7) au moins de la donnée « identifiant de valve » contenue dans ladite trame spécifique, un moyen de distinction rendant distinguable ladite donnée,
- mise en correspondance de l'identifiant de ladite roue (5) avec l'identifiant de ladite valve (6) par ledit opérateur (7),
- entrée dans ladite mémoire de l'identifiant de ladite valve (6) en correspondance avec l'identifiant de ladite roue (5),
**caractérisé en ce**
- ledit outil de diagnostic (1) peut recevoir au moins les données « identifiant de valve » et « état » par l'intermédiaire dudit récepteur de bord (3).

2. Procédé selon la revendication 1 **caractérisé en ce que** lesdites données « identifiant de valve » et « état » reçues par ledit outil de diagnostic (1) sont préalablement décodées par ledit calculateur de bord (2).

3. Procédé selon la revendication 1 ou 2 **caractérisé en ce que** ladite excitation spécifique est provoquée au moyen d'un outil émetteur (4).

4. Procédé selon l'une quelconque des revendications précédentes **caractérisé en ce que** ladite excitation spécifique est provoquée au moyen d'un dégonflage d'un pneumatique d'une roue (5) portant ladite valve (6).

5. Procédé selon l'une quelconque des revendications précédentes **caractérisé en ce que** ledit outil de diagnostic (1) réalise ladite analyse d'au moins les données « identifiant de valve » et « état » contenues dans ladite trame spécifique et ladite reconnaissance de l'identifiant de ladite valve (6),

6. Procédé selon l'une quelconque des revendications précédentes **caractérisé en ce que** ledit opérateur (7) réalise ladite mise en correspondance au moyen dudit outil de diagnostic (1).

7. Procédé selon l'une quelconque des revendications précédentes **caractérisé en ce qu'**on réalise ladite entrée dans ladite mémoire dudit identifiant de valve en correspondance avec ledit identifiant de roue au moyen dudit outil de diagnostic (1).

8. Procédé selon la revendication 7 **caractérisé en ce que** ledit outil de diagnostic (1) transmet audit calculateur de bord (2) un identifiant de valve qu'il a reçu dudit calculateur de bord (2).

9. Procédé selon l'une quelconque des revendications précédentes **caractérisé en ce qu'**on entre un identifiant de jeu de roues dans ladite mémoire en correspondance avec ledit identifiant de roue et ledit identifiant de valve.

10. Dispositif de mise en correspondance d'un identifiant d'une valve émettrice (6) d'une roue (5) avec un identifiant de ladite roue (5) enregistré dans une mémoire d'un calculateur de bord (2) d'un véhicule automobile, ladite valve (6) pouvant émettre, en réponse à une excitation spécifique, une trame de signaux hertziens spécifique contenant au moins un identifiant de valve et un état spécifique, un récepteur de bord (3) recevant ladite trame, la transmettant audit calculateur de bord (2) et ledit calculateur de bord (2) décodant ladite trame,
**caractérisé en ce qu'**il comporte un outil de diagnostic (1), apte à recevoir au moins ledit identifiant de valve et ledit état spécifique par l'intermédiaire dudit récepteur de bord (3) et à les présenter à un opérateur (7).

## Claims

1. Method of matching an identifier of an emitting valve (6) of a wheel (5) with an identifier of the said wheel (5) recorded in a memory of an onboard computer (2) of a motor vehicle, the said valve (6) being capable of emitting, in response to a specific excitation, a specific frame of radio signals containing at least one valve identifier and one specific state, an onboard receiver (3) receiving the said frame, transmitting it to the said onboard computer (2) and the said onboard computer (2) decoding the said frame, comprising the following steps:
- specific excitation of the said valve (6),
- reception of the said specific frame emitted in response to the said excitation,
- decoding of the said specific frame,
- analysis of at least the "valve identifier" and "state" data contained in the said specific frame and recognition of the identifier of the said valve (6),
- presentation to an operator (7), by means of a diagnostic tool (1), of at least the "valve identifier" data contained in the said specific frame, a distinguishing means making the said data distinguishable,
- matching of the identifier of the said wheel (5) with the identifier of the said valve (6) by the said operator (7),
- input into the said memory of the identifier of the said valve (6) matching the identifier of the said wheel (5),
**characterized in that** the said diagnostic tool (1) can receive at least the "valve identifier" and "state" data via the said onboard receiver (3).

2. Method according to Claim 1, **characterized in that** the said "valve identifier" and "state" data received by the said diagnostic tool (1) are previously decoded by the said onboard computer (2) .

3. Method according to Claim 1 or 2, **characterized in that** the said specific excitation is produced by means of an emitting tool (4).

4. Method according to any one of the preceding claims, **characterized in that** the said specific excitation is produced by means of a deflation of a tyre of a wheel (5) bearing the said valve (6).

5. Method according to any one of the preceding claims, **characterized in that** the said diagnostic tool (1) performs the said analysis of at least the "valve identifier" and "state" data contained in the said specific frame and the said recognition of the identifier of the said valve (6) .

6. Method according to any one of the preceding claims, **characterized in that** the said operator (7) performs the said matching by means of the said diagnostic tool (1) .

7. Method according to any one of the preceding claims, **characterized in that** the said input into the said memory of the said valve identifier matching the said wheel identifier is performed by means of the said diagnostic tool (1).

8. Method according to Claim 7, **characterized in that** the said diagnostic tool (1) transmits to the said onboard computer (2) a valve identifier which it has received from the said onboard computer (2).

9. Method according to any one of the preceding claims, **characterized in that** a wheelset identifier is input into the said memory matching the said wheel identifier and the said valve identifier.

10. Device for matching an identifier of an emitting valve (6) of a wheel (5) with an identifier of the said wheel (5) recorded in a memory of an onboard computer (2) of a motor vehicle, the said valve (6) being able to emit, in response to a specific excitation, a specific frame of radio signals containing at least one valve identifier and one specific state, an onboard receiver (3) receiving the said frame, transmitting it to the said onboard computer (2) and the said onboard computer (2) decoding the said frame, **characterized in that** it comprises a diagnostic tool (1) capable of receiving at least the said valve identifier and the said specific state via the said onboard receiver (3) and of presenting them to an operator (7).

## Patentansprüche

1. Verfahren, um eine Kennung eines sendenden Ventils (6) eines Rads (5) mit einer Kennung des Rads (5) in Übereinstimmung zu bringen, die in einem Bordrechner (2) eines Kraftfahrzeugs gespeichert ist, wobei das Ventil (6) als Reaktion auf eine spezifische Erregung einen spezifischen Rahmen von Funksignalen senden kann, der mindestens eine Ventilkennung und einen spezifischen Zustand enthält, wobei ein Bordempfänger (3) den Rahmen empfängt, an den Bordrechner (2) überträgt, und der Bordrechner (2) den Rahmen decodiert, das die folgenden Schritte aufweist:
- spezifische Erregung des Ventils (6),
- Empfang des spezifischen Rahmens, der als Reaktion auf die Erregung gesendet wird,
- Decodierung des spezifischen Rahmens,
- Analyse mindestens der im spezifischen Rahmen enthaltenen Daten "Ventilkennung" und "Zustand", und Erkennung der Kennung des Ventils (6),
- Präsentation, für eine Bedienungsperson (7), mindestens des im spezifischen Rahmen enthaltenen Datenwerts "Ventilkennung" mittels eines Diagnosewerkzeugs (1), wobei eine Unterscheidungseinrichtung den Datenwert unterscheidbar macht,
- in Übereinstimmung bringen, durch die Bedienungsperson (7), der Kennung des Rads (5) mit der Kennung des Ventils (6),
- Eingabe der Kennung des Ventils (6) in den Speicher in Übereinstimmung mit der Kennung des Rads (5),
**dadurch gekennzeichnet, dass** das Diagnosewerkzeug (1) mindestens die Datenwerte "Ventilkennung" und "Zustand" mittels des Bordempfängers (3) empfangen kann.

2. Verfahren nach Anspruch 1, **dadurch gekennzeichnet, dass** die vom Diagnosewerkzeug (1) empfangenen Daten "Ventilkennung" und "Zustand" vorher vom Bordrechner (2) decodiert werden.

3. Verfahren nach Anspruch 1 oder 2, **dadurch gekennzeichnet, dass** die spezifische Erregung mittels eines Sendewerkzeugs (4) bewirkt wird.

4. Verfahren nach einem der vorhergehenden Ansprüche,
**dadurch gekennzeichnet, dass** die spezifische Erregung durch ein Luftablassen eines Luftreifens eines das Ventil (6) tragenden Rads (5) bewirkt wird.

5. Verfahren nach einem der vorhergehenden Ansprüche,
**dadurch gekennzeichnet, dass** das Diagnosewerkzeug (1) die Analyse mindestens der Daten "Ventilkennung" und "Zustand", die im spezifischen Rahmen enthalten sind, und die Erkennung der Kennung des Ventils (6) durchführt.

6. Verfahren nach einem der vorhergehenden Ansprüche, **dadurch gekennzeichnet, dass** die Bedienungsperson (7) die Übereinstimmung mittels des Diagnosewerkzeugs (1) erzielt.

7. Verfahren nach einem der vorhergehenden Ansprüche, **dadurch gekennzeichnet, dass** die Eingabe der Ventilkennung in den Speicher in Übereinstimmung mit der Radkennung mittels des Diagnosewerkzeugs (1) durchgeführt wird.

8. Verfahren nach Anspruch 7, **dadurch gekennzeichnet, dass** das Diagnosewerkzeug (1) an den Bordrechner (2) eine Ventilkennung überträgt, die es vom Bordrechner (2) empfangen hat.

9. Verfahren nach einem der vorhergehenden Ansprüche, **dadurch gekennzeichnet, dass** eine Radsatz-Kennung in Übereinstimmung mit der Radkennung und der Ventilkennung in den Speicher eingegeben wird.

10. Vorrichtung, um eine Kennung eines sendenden Ventils (6) eines Rads (5) mit einer Kennung des Rads (5) in Übereinstimmung zu bringen, die in einem Speicher eines Bordrechners (2) eines Kraftfahrzeugs gespeichert ist, wobei das Ventil (6) als Antwort auf eine spezifische Erregung einen spezifischen Rahmen von Funksignalen senden kann, der mindestens eine Ventilkennung und einen spezifischen Zustand enthält, wobei ein Bordempfänger (3) den Rahmen empfängt, an den Bordrechner (2) überträgt, und der Bordrechner (2) den Rahmen decodiert,
**dadurch gekennzeichnet, dass** sie ein Diagnosewerkzeug (1) aufweist, das mindestens die Ventilkennung und den spezifischen Zustand mittels des Bordempfängers (3) empfangen und einer Bedienungsperson (7) präsentieren kann.
